# EUROPÄISCHE PATENTSCHRIFT

(11) **EP 2 987 682 B1**
(45) Veröffentlichungstag und Bekanntmachung des Hinweises auf die Patenterteilung: **16.12.2020**
(21) Anmeldenummer: 14306297.4
(22) Anmeldetag: 20.08.2014
(51) Int. Cl.: B60R 16/027

(54) **Anordnung für in einem Kraftfahrzeug montierte elektrische Leitungen**
Assembly for electrical wires installed in a motor vehicle
Agencement pour des conduites électriques montées dans un véhicule automobile

(43) Veröffentlichungstag der Anmeldung: 24.02.2016
(60) Teilanmeldung: 20154361.8
(73) Patentinhaber: Nexans, 92400 Courbevoie (FR)
(72) Erfinder: Schröer, Frank, 92637 Weiden (DE); Steinert, Alexander, 92685 Floss (DE); Wall, Markus, 92685 Floss (DE); Rebhan, Helmut, 92637 Weiden (DE)
(74) Vertreter: Ipsilon

(56) Entgegenhaltungen:
- EP-A2- 1 241 055
- WO-A1-00/51844
- DE-A1- 4 329 117
- DE-A1- 4 404 407
- DE-T2- 69 214 021
- US-A- 5 246 377

## Beschreibung

Die Erfindung bezieht sich auf eine Anordnung für in einem Kraftfahrzeug montierte elektrische Leitungen mit einem Lenkstockschaltermodul und mit einem auf dasselbe aufgesetzten Lenkrad.

Eine solche Anordnung ist weltweit bekannt und im Einsatz. Neben Kabelbäumen bzw. Kabelsätzen, über welche Verbraucher von elektrischem Strom eines Kraftfahrzeugs - im Folgenden kurz "Fahrzeug" genannt - an eine im Fahrzeug vorhandene Spannungsquelle angeschlossen werden, ist in modernen Fahrzeugen eine Anordnung vorhanden, wie sie eingangs beschrieben ist. Eine solche Anordnung weist zahlreiche elektrische Bauteile auf, wie beispielsweise Tasten oder in Hebeln, die auch als Lenkstockschalter bezeichnet werden, angeordnete Bauteile. An einem Lenkstockschaltermodul - im Folgenden kurz als "Modul" bezeichnet - angebrachte Hebel mit elektrischen Bauteilen sind beispielsweise ein Hebel zur Betätigung des Scheibenwischers, ein Hebel für die Blinkanlage und ein Hebel für eine automatische Verstellung des Lenkrades.

Alle erwähnten und auch weitere elektrische Bauteile sind über Einzelleitungen mit dem Bordnetz des Fahrzeugs verbunden. Zahlreiche Funktionstasten für unterschiedlichste Funktionen sind mit Vorteil im Lenkrad montiert. Für die elektrische Verbindung der im Lenkrad montierten Funktionselemente kann ein als "Airbagkassette" bezeichneter Drehverbinder eingesetzt sein, der mindestens eine elektrische Leitung aufweist, an welche die Funktionselemente angeschlossen sind. Auch diese Leitung muß mittels einer weiterführenden Leitung mit dem Bordnetz des Fahrzeugs verbunden werden. Ein solcher Drehverbinder besteht im Wesentlichen aus einem in dem Modul des Fahrzeugs montierten Stator und einem um die Achse desselben drehbaren, mit dem Lenkrad verbundenen Rotor. Zwischen Stator und Rotor ist mindestens eine in Windungen verlaufende elektrische Leitung angeordnet, welche die Drehung des Lenkrads ohne den Einsatz von schleifenden Kontakten mitmacht. Die Druckschriften

EP 1 973 205 A1, DE 692 14 021 T2, WO 00/51844 A1, DE 44 04 407 A1, US 5,246,377 A und EP 1 241 055 A2 beschreiben unterschiedliche Ausführungsformen eines Drehverbinders. Die elektrische Verbindung der im Vorangehenden erwähnten, an oder in einem Modul bzw. an oder in einem Lenkrad vorhandenen elektrischen Bauteile bzw. Funktionselemente eines Fahrzeugs zum Bordnetz ist in bisheriger Technik aufwendig.

In der DE 43 29 117 A1 ist ein Stromverbinder für eine mehrpolige elektrische Leitung beschrieben. Die Leitung ist in einem Gehäuse einer elektrischen Drehverbindung angeordnet und geführt, die aus einem Stator und in einem Rotor besteht. Ein solcher Stromverbinder wird als Drehleitungsverbinder im Kraftfahrzeugbau zur Herstellung einer elektrisch leitenden Verbindung zwischen den Anschlüssen eines Lenkrades und Lenksäule eingesetzt. Die elektrische Leitung ist in einem durch den Stator und den Rotor begrenzten Raum angeordnet. Sie stellt eine Verbindung zwischen zwei im Stator bzw. im Rotor angeordneten Anschlüssen her, die mittels jeweils einer äußeren und einer inneren Leitung mit einer Stromquelle bzw. einem Verbraucher verbunden sind. Als Verbindungselemente dienen jeweils mit Rohrstiften ausgerüstete Buchsen und auf die Buchsen aufsteckbare Stecker.

Der Erfindung liegt die Aufgabe zugrunde, die eingangs geschilderte Anordnung so zu gestalten, dass in dem Modul und/oder im Lenkrad eines Fahrzeugs vorhandene elektrische Bauteile einfacher mit dem Bordnetz des Fahrzeugs verbunden werden können.

Diese Aufgabe wird entsprechend der Gesamtheit der Merkmale des Patentanspruchs 1 gelöst.

Vorteilhafte Weiterbildungen sind Gegenstand der abhängigen Ansprüche 2 und 3.

Ausführungsbeispiele des Erfindungsgegenstandes sind in den Zeichnungen dargestellt.

Es zeigen:
Fig. 1 in schematischer Darstellung eine Draufsicht auf ein Lenkrad eines Fahrzeugs.
Fig. 2 ebenfalls in schematischer Darstellung das Innenleben eines Moduls unterhalb des Lenkrads.
Fig. 3 ein elektrisches Kontaktelement mit angeschlossenen Leitungen.
Fig. 4 und 5 zwei unterschiedliche Ansichten eines Kupplungskörpers.
Fig. 6 ein auf dem Kupplungskörper aufgestecktes Steckelement.
Bei der Anordnung nach der Erfindung werden die elektrischen Leiter von Leitungen an Kontakte eines Kupplungskörpers angeschlossen. Sie können in bevorzugter Ausführungsform, die im Folgenden beschrieben wird, im

Wege der Vorfertigung mit den Kontakten bestückt werden, die danach in Ausnehmungen des Kupplungskörpers angeordnet werden. Die Leiter können aber auch an bereits im Kupplungskörper befindliche Kontakte angeschlossen werden. Das gilt auch dann, wenn wegen einer höheren Anzahl von Leitungen bzw. Leitern zwei oder mehr elektrische Kontakte enthaltende Kupplungskörper eingesetzt werden.

Die auf der Steckseite des Kupplungskörpers aus demselben herausragenden Enden der Kontakte können als Stifte oder als Buchsen ausgeführt sein. In Anpassung an die Form der Kontakte ist das Steckelement dann entweder eine Buchse oder ein Stecker.

In der folgenden Beschreibung wird die Anordnung nach der Erfindung als Anordnung mit nur einem Kupplungskörper beschrieben. Statt des Wortes "Lenkstockschaltermodul" wird weiter das Wort "Modul" verwendet.

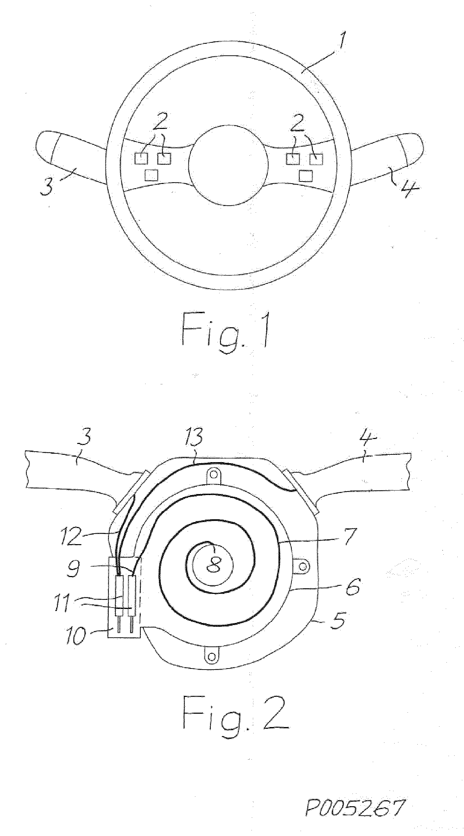

In Fig. 1 ist ein Lenkrad 1 schematisch dargestellt, das mit beispielsweise sechs von Hand zu betätigenden, Funktionselemente abdeckenden Tasten 2 ausgerüstet ist. Die Tasten 2 können beispielsweise zu einer Telefonanlage, zu einem Lautsprecher mit "lauter"- bzw. "leiser"-Funktion und zu einem sogenannten "Tempomat" gehören. Es sind außerdem zwei an dem vom Lenkrad 1 verdeckten und daher in Fig. 1 nicht erkennbaren Modul angebrachte Hebel 3 und 4 angedeutet, die elektrische Bauteile enthalten. An die Tasten 2 sowie die elektrischen Bauteile der Hebel 3 und 4 sind die Leiter von elektrischen Leitungen angeschlossen, welche im fertig montierten Zustand mit dem Bordnetz des Fahrzeugs verbunden sind.

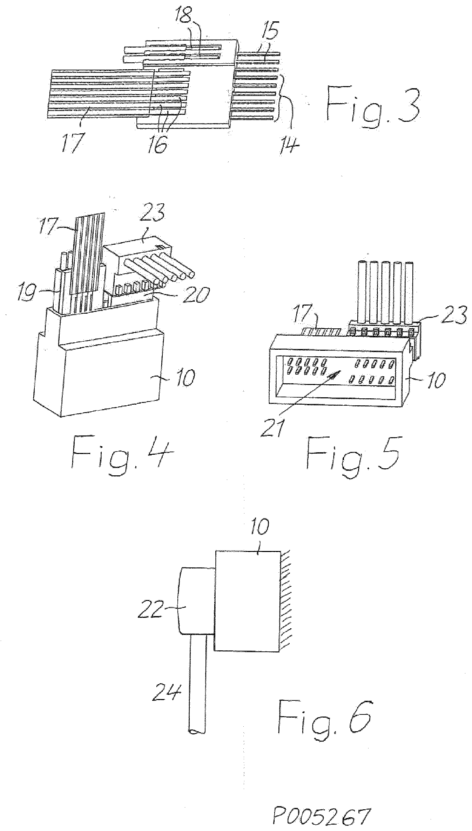

In Fig. 2 ist rein schematisch eine Draufsicht auf ein nur angedeutetes Modul 5 eines Fahrzeugs dargestellt, von welchem das Lenkrad 1 abgenommen ist. In einem fest mit dem Modul 5 verbundenen Stator 6 eines Drehverbinders ist eine in Windungen verlaufende elektrische Leitung 7 angeordnet. Das Ende 8 der Leitung 7 ist in bekannter Technik mit den Funktionselementen der Tasten 2 des Lenkrades 1 verbunden. Das andere, freie Ende 9 der Leitung 7 endet in einem aus Kunststoff bestehenden Kupplungskörper 10. Dieses Ende der Leitung 7 bzw. die in derselben vorhandenen elektrischen Leiter ist bzw. sind innerhalb des Kupplungskörpers 10 an ein elektrisches Kontaktelement 11 angeschlossen, dessen möglicher Aufbau aus den Fig. 4 und 5 hervorgeht.

Ebenfalls schematisch angedeutete Leitungen 12 und 13 bzw. deren jeweilige elektrische Leiter sind mit elektrischen Bauteilen verbunden, welche im Hebel 3 einerseits und im Hebel 4 andererseits angeordnet sind. Die Leitungen 12 und 13 weisen mindestens einen isolierten elektrischen Leiter auf, mit Vorteil aber zwei oder mehr gegeneinander isolierte elektrische Leiter. Die freien Enden der Leitungen 12 und 13 sind ebenfalls an ein im Kupplungskörper 10 befindliches elektrisches Kontaktelement 11 angeschlossen, das wieder anhand der Fig. 4 und 5 erläutert wird.

Fig. 3 zeigt schematisch ein Kontaktelement 11, das eine Anzahl von als Stifte ausgeführten elektrischen Kontakten 14 und 15 aufweist. An die Kontakte 14 sind im dargestellten Ausführungsbeispiel die als Flachleiter ausgebildeten elektrischen Leiter 16 einer Flachleiter-Bandleitung 17 elektrisch leitend angeschlossen. Die Flachleiter-Bandleitung 17 kann beispielsweise die im Stator 6 des Drehverbinders angeordnete Leitung 7 sein.

An die Kontakte 14 sind im dargestellten Ausführungsbeispiel zwei als Rundleiter 18 ausgeführte elektrische Leiter elektrisch leitend angeschlossen, die beispielsweise zur Leitung 12 oder zur Leitung 13 gemäß Fig. 2 gehören.

Dem Kontaktelement 11 nach Fig. 3 entsprechende Kontaktelemente 19 und 20 sind gemäß den Fig. 4 und 5 derart in dem aus Kunststoff bestehenden Kupplungskörper 10 angebracht, dass die Enden der jeweiligen Kontakte 14 oder 15 an einer Steckseite 21 des Kupplungskörper 10 von außen zugänglich sind. Sie ragen an der Steckseite 21 aus dem Kupplungskörper 10 heraus, so dass ein passendes Steckelement 22 (Fig. 6) aufgesteckt werden kann. Das Steckelement 22 ist in Abhängigkeit von der Form der Kontakte 14 und 15 entweder als Buchse oder als Stecker ausgeführt.

Der Kupplungskörper 10 ist so ausgebildet, dass er entsprechend den Kontaktelementen 11, 19 und 20 unterschiedliche Leitungsarten aufnehmen kann. So sind beispielsweise am Kontaktelement 19 die Leiter der Flachleiter-Bandleitung 17 mit den Kontakten 14 elektrisch verbunden. Das Kontaktelement 20 ist beispielsweise so ausgebildet, dass es die elektrische Verbindung der Rundleiter 18 zu den Kontakten 15 mit Hilfe eines aufzuschiebenden Platinensteckers 23 ermöglicht.

Wie bereits erwähnt, können die elektrischen Leiter der Leitungen vorzugsweise im Wege der Vorfertigung mit den elektrischen Kontakten bestückt werden. Die Kontakte bzw. Kontaktelemente werden dann in einen vorgefertigten Kupplungskörper eingesetzt. Es wäre aber auch möglich, die elektrischen Leiter an bereits im Kupplungskörper angebrachte elektrische Kontakte anzuschließen.

Der Kupplungskörper 10 ist in Montageposition an bzw. in dem Modul 5 eines Fahrzeugs befestigt. Dazu kann er beispielsweise am Stator 6 des Drehverbinders angebracht sein. Gemäß Fig. 6 ist auf den Kupplungskörper 10 ein Steckelement 22 aufgesteckt, das am Ende einer elektrischen Leitung 24 angeordnet ist. Die Leitung 24 weist eine der Anzahl von Kontakten des Kupplungskörpers 10 entsprechende Anzahl von elektrischen Leitern auf. Sie ist mit ihrem fernen Ende mit dem Bordnetz des Fahrzeugs verbunden.

## Patentansprüche

1. Anordnung mit einem Drehverbinder, der eine in Windungen verlaufende elektrische Leitung (7) aufweist, die mit einem ihrer Enden mit Funktionselementen von Tasten (2) elektrisch leitend verbunden ist, die in einem auf ein Lenkstockschaltermodul aufgesetzten Lenkrad eines mit einem Bordnetz ausgerüsteten Kraftfahrzeugs montiert sind,
**dadurch gekennzeichnet,**
- **dass** die Anordnung zwei weitere Leitungen (12,13) aufweist, die außerhalb des Drehverbinders liegen, die in dem Lenkstockschaltermodul angebracht und die mit einem ihrer Enden mit jeweils einem elektrischen Bauteil elektrisch leitend verbunden sind, wobei die elektrischen Bauteile in Hebeln (3,4) angeordnet sind, welche in dem Lenkstockschaltermodul montiert sind,
- **dass** alle Leitungen (7;12,13) mit ihren anderen, freien Enden mit elektrischen Kontakten (14,15) verbunden sind, die in mindestens einem Kupplungskörper (10) aus Isoliermaterial derart angeordnet sind, dass sie auf einer Steckseite (21) des Kupplungskörpers (10) zum Aufstecken eines elektrischen Steckelements (22) zugänglich sind,
- **dass** der Kupplungskörper (10) mit von außen zugänglicher Steckseite (21) an bzw. in dem Lenkstockschaltermodul (5) des Kraftfahrzeugs montiert ist und
- **dass** auf den montierten Kupplungskörper (10) eine zum Bordnetz des Kraftfahrzeugs führende elektrische Leitung (24) über das an der elektrischen Leitung (24) angebrachte Steckelement (22) angeschlossen ist.

2. Anordnung nach Anspruch 1, **dadurch gekennzeichnet, dass** der Kupplungskörper (10) an einem fest mit dem Lenkstockschaltermodul (5) verbundenen Stator (6) des Drehverbinders angebracht ist.

3. Anordnung nach Anspruch 1 oder 2, **dadurch gekennzeichnet, dass** die elektrischen Leiter der Leitungen im Wege der Vorfertigung mit elektrischen Kontakten bestückt sind, die im Montagezustand in den vorgefertigten Kupplungskörper (10) eingesetzt sind.

## Claims

1. An arrangement with a rotary connector, which has an electrical line (7) running in turns, which is connected in an electrically conductive manner with one of its ends to functional elements of keys (2), which are mounted in a steering wheel placed on a steering column switch module of a motor vehicle equipped with an on-board electrical system,
**characterized in**
- **that** the arrangement has two further lines (12, 13), which lie outside of the rotary connector, which are attached in the steering column switch module and which are connected in an electrically conductive manner with one of its ends to in each case one electrical component, wherein the electrical components are arranged in levers (3, 4), which are mounted in the steering column switch module,
- **that** all lines (7; 12, 13) are connected with their other free ends to electrical contacts (14, 15), which are arranged in at least one coupling body (10) made of insulating material in such a manner, that they are accessible on a plug-in side (21) of the coupling body (10) for the attachment of an electrical plug-in element (22),
- **that** the coupling body (10) is mounted with an externally accessible plug-in side (21) on or in the steering column switch module (5) of the motor vehicle and
- **that** an electrical line (24) leading to the on-board electrical system of the motor vehicle is connected to the mounted coupling body (10) via the plug-in element (22) attached to the electrical line (24).

2. The arrangement according to claim 1, **characterized in that** the coupling body (10) is attached to a stator (6) of the rotary connector, which is fixedly connected to the steering column switch module (5).

3. The arrangement according to claim 1 or 2, **characterized in that** the electrical conductors of the lines are equipped with electrical contacts by way of prefabrication, which are inserted into the prefabricated coupling body (10) in the assembled state.

## Revendications

1. Disposition avec un connecteur rotatif qui comprend une conduite électrique (7) s'étendant en spires, qui est reliée électriquement, avec une de ses extrémités, avec des éléments fonctionnels de touches (2), qui sont montés dans un volant de direction posé sur un module de commutateur de colonne de direction d'un véhicule automobile équipé d'un réseau embarqué,
**caractérisée en ce que**
- la disposition comprend deux autres conduites (12, 13) qui se trouvent à l'extérieur du connecteur rotatif, qui sont montées dans le module de commutateur de colonne de direction et qui sont reliées électriquement, avec une de leurs extrémités, chacune avec un composant électrique, dans laquelle les composants électriques sont disposés dans des leviers (3, 4) qui sont montés dans le module de commutateur de colonne de direction,
- toutes les conduites (7 ; 12, 13) sont reliées, avec leurs autres extrémités libres, avec des contacts électriques (14, 15) qui sont disposés dans au moins un corps de couplage (10) en matériau isolant de façon à être accessibles sur un côté d'enfichage (21) du corps de couplage (10) pour l'emboîtement d'un élément d'enfichage électrique (22),
- le corps de couplage (10) est monté, avec un côté d'enfichage (21) accessible de l'extérieur, sur resp. dans le module de commutateur de colonne de direction (5) du véhicule automobile et
- sur le corps de couplage (10) monté, une conduite électrique (24) conduisant au réseau embarqué du véhicule automobile est raccordé par l'intermédiaire de l'élément d'enfichage (22) monté sur la conduite électrique (24).

2. Disposition selon la revendication 1, **caractérisée en ce que** le corps de couplage (10) est monté sur un stator (6) du connecteur rotatif relié de manière fixe avec le module de commutateur de colonne de direction (5).

3. Disposition selon la revendication 1 ou 2, **caractérisée en ce que** les conducteurs électriques des conduites sont équipés, au cours de la préfabrication, de contacts électriques qui sont utilisés dans l'état de montage dans les corps de couplage (10) préfabriqués.
